## Europäisches Patentamt

## European Patent Office

## Office européen des brevets

(19)

(11) **EP 0 924 241 A2**

(12) **EUROPÄISCHE PATENTANMELDUNG**

(43) Veröffentlichungstag:
   **23.06.1999 Patentblatt 1999/25**

(51) Int. Cl.⁶: $C08J\ 3/16$, $C04B\ 24/26$

(21) Anmeldenummer: 98124348.8

(22) Anmeldetag: **21.12.1998**

(84) Benannte Vertragsstaaten:
   **AT BE CH CY DE DK ES FI FR GB GR IE IT LI LU
   MC NL PT SE**
   Benannte Erstreckungsstaaten:
   **AL LT LV MK RO SI**

(30) Priorität: **22.12.1997 DE 19757298**

(71) Anmelder:
   **BASF AKTIENGESELLSCHAFT
   67056 Ludwigshafen (DE)**

(72) Erfinder:
   • **Pakusch, Joachim Dr.
    67346 Speyer (DE)**
   • **Reck, Bernd Dr.
    67269 Grünstadt (DE)**

   • **Claassen, Peter
    67063 Ludwigshafen (DE)**
   • **Denu, Hans-Jürgen
    67159 Friedelsheim (DE)**
   • **Wistuba, Eckehardt Dr.
    67098 Bad Dürkheim (DE)**
   • **Heibel, Claudia Dr.
    69469 Weinheim (DE)**

(74) Vertreter:
   **Kinzebach, Werner, Dr. et al
   Patentanwälte,
   Reitstötter, Kinzebach & Partner,
   Ludwigsplatz 4
   67059 Ludwigshafen (DE)**

(54)   **Verfahren zur Herstellung von Polymerpulvern**

(57)   Die vorliegende Erfindung betrifft ein Verfahren
zur Herstellung von Polymerpulvern aus wäsrigen Polymerisatdispersionen, worin das dispergierte Polymerisat P in einpolymerisierter Form

   i) wenigstens ein vinylaromatisches Monomer (a),

   ii) 1,3-Butadien als Monomer (b) und

   iii) ein oder mehrere von den Monomeren (a) und
   (b) verschiedene Monomere (c)

enthält, das dadurch gekennzeichnet ist, dass man die
wässrige Polymerisatdispersion in Anwesenheit von
Polyvinylalkohol als Trocknungsmittel trocknet.
   Die vorliegende Erfindung betrifft auch die durch
dieses Verfahren erhältlichen Polymerpulver sowie die
Verwendung dieser Polymerpulver als Bindemittel in
Anstrichmassen, in Beschichtungsmassen, in Lacken,
in Klebstoffen und zur Modifizierung mineralischer Baustoffe. Die vorliegende Erfindung betrifft auch mineralische Baustoffe in Form von Trockenzubereitungen, die
die erfindungsgemäßen Polymerpulver enthalten.

**Beschreibung**

Die vorliegende Erfindung betrifft ein Verfahren zur Herstellung von Polymerpulvern aus wässrigen Polymerisatdispersionen, worin das dispergierte Polymerisat P in einpolymerisierter Form

i) wenigstens ein vinylaromatisches Monomer (a),

ii) 1,3-Butadien als Monomer (b) und

iii) ein oder mehrere von den Monomeren (a) und (b) verschiedene Monomere (c)

enthält. Weiterhin betrifft die vorliegende Erfindung die durch das erfindungsgemäße Verfahren erhältlichen Polymerpulver sowie deren Verwendung, insbesondere deren Verwendung zur Modifizierung mineralischer Baustoffe.

Wässrige Dispersionen auf der Basis von Styrol/Butadien-Polymeren sind wichtige großtechnische Produkte. Gegenüber Dispersionen auf der Basis von Styrol/Butylacrylat-Polymeren besitzen sie einen erheblichen Kostenvorteil, da Butadien direkt aus dem $C_4$-Schnitt des Steamcrackers abgetrennt werden kann, wohingegen Butylacrylat in wenigstens zwei Schritten ausgehend von Steamcrackerprodukten hergestellt werden muss. Neben der Hauptanwendung als synthetischer Gummi und als Schlagzähmodifizierer in technischen Kunststoffen finden wässrige Polymerisatdispersionen auf der Basis von Styrol/Butadien-Polymeren Anwendung in Beschichtungsmitteln, beispielsweise für Papier, als Klebstoffe oder als Bindemittel, beispielsweise in Dispersionsfarben oder in kunstharzgebundenen Putzen. In der EP-A-754 657 wird über die Verwendung von wässrigen Styrol/Butadien-Polymerisatdispersionen zur Modifizierung mineralischer Baustoffe berichtet.

Für eine Reihe von den vorgenannten Anwendungen ist es erwünscht, nicht die wässrigen Polymerisatdispersionen, sondern das Polymer in Pulverform einzusetzen. Um das Polymerisat in Pulverform zu erhalten, muss die Dispersion einem Trocknungsvorgang unterzogen werden, beispielsweise einer Sprühtrocknung oder einer Gefriertrocknung. Bei der Sprühtrocknung wird die Polymerisatdispersion in einem Warmluftstrom versprüht und entwässert, wobei die Trockenluft und die versprühte Dispersion vorzugsweise im Gleichstrom durch den Trockner geführt werden.

Bei der Herstellung von Polymerpulvern durch Trocknung wässriger Polymerisatdispersionen ist zu beachten, dass die Polymerisatteilchen der wässrigen Dispersion beim Trocknen miteinander aggregieren, d. h. sogenannte Sekundärteilchen bilden. Die mit der Sekundärteilchenbildung einhergehende Vergröberung des Polymerpulvers hat in der Regel schlechtere anwendungstechnische Eigenschaften zur Folge. Eine verstärkte Sekundärteilchenbildung hat zudem in der Regel die Ausbildung von Polymerbelägen an den Trocknerwänden zur Folge und bewirkt so eine Verringerung der Pulverausbeute im Trocknungsschritt.

Zur Verminderung der Sekundärteilchenbildung beim Trocknen werden den wässrigen Polymerisatdispersionen häufig sogenannte Trocknungshilfsmittel zugesetzt. Diese werden auch vielfach als Sprühhilfsmittel bezeichnet, da die Sprühtrocknung die Bildung von Sekundärteilchen besonders fördert.

Typische Trocknungshilfsmittel (häufig als Sprühhilfsmittel bezeichnet) des Standes der Technik sind Naphthalinsulfonsäure-Formaldehyd-Kondensationsprodukte, wie sie in der DE-A-24 45 813 und der EP-A-407 889 A1 beschrieben sind. Weitere Sprühhilfsmittel sind Melamin-Formaldehyd-Kondensationsprodukte, Copolymere und Homopolymere des Vinylpyrrolidons (siehe z. B. EP-A-78 449 und EP-A-576 844), Copolymere ethylenisch ungesättigter Carbonsäuren mit hydrophoben Monomeren (siehe z. B. EP-A-467 103) oder mit Hydroxyalkylestern (siehe z. B. JP-A-59-162161). Sprühhilfsmittel sind auch die Sulfonsäuregruppen enthaltenden Polymere der EP-A-629 650.

Die EP-A-62 106 beschreibt die Herstellung wässriger Polymerisatdispersionen auf der Basis von (Meth)acrylsäureestern und/oder Styrol in Gegenwart von Polyvinylalkohol als Schutzkolloid. Die Sprühtrocknung der so erhältlichen Dispersionen wird vorgeschlagen.

Die Verwendung von Polyvinylalkohol bei der Trocknung von wässrigen Vinylester-Polymerisaten, beispielsweise von Polyvinylacetat-Dispersionen, ist es aus der EP-A-56 622, der EP-A-680 993, der DE-A-22 14 410 und der DE-A-26 14 261 bekannt.

Die EP-A-601 518 beschreibt die Trocknung wässriger Polyacrylat-Dispersionen in Gegenwart von Polyvinylalkohol.

Bei der Herstellung von Polymerpulvern durch Trocknung wässriger Polymerisatdispersionen in Gegenwart von Trocknungshilfsmitteln ist zu beachten, dass diese die anwendungstechnischen Eigenschaften der Polymerpulver massiv beeinflussen können. Zudem ist nicht jedes Trocknungshilfsmittel für die Trocknung einer speziellen Polymerisatdispersion geeignet.

Angesichts des großen Interesses an Styrol/Butadien-Polymerisaten, bestand Interesse, diese in Pulverform bereitzustellen. Der vorliegenden Erfindung liegt somit die Aufgabe zugrunde, ein Verfahren zur Herstellung von Polymerpulvern bereitzustellen, die im Wesentlichen aus vinylaromatischen Monomeren und Butadien aufgebaut sind.

Überraschenderweise wurde gefunden, dass sich wässrige Polymerisatdispersionen, die im Wesentlichen aus

2

vinylaromatischen Monomeren und Butadien aufgebaut sind, in Gegenwart von Polyvinylalkohol als Trocknungshilfsmittel, getrocknet werden können. Derartige Polymerpulver zeichnen sich insbesondere durch ihre vorteilhaften anwendungstechnischen Eigenschaften in mineralischen Baustoffen aus.

Demnach betrifft die vorliegende Erfindung ein Verfahren zur Herstellung von Polymerpulvern aus wäsrigen Polymerisatdispersionen, worin das dispergierte Polymerisat P in einpolymerisierter Form

i) wenigstens ein vinylaromatisches Monomer (a),

ii) 1,3-Butadien als Monomer (b) und

iii) ein oder mehrere von den Monomeren (a) und (b) verschiedene Monomere (c)

enthält, das dadurch gekennzeichnet ist, dass man die wässrige Polymerisatdispersion in Anwesenheit von Polyvinylalkohol als Trocknungsmittel trocknet. Die vorliegende Erfindung betrifft auch die durch dieses Verfahren erhältlichen Polymerpulver sowie die Verwendung dieser Polymerpulver als Bindemittel in Anstrichmassen, in Beschichtungsmassen, in Lacken, in Klebstoffen und zur Modifizierung mineralischer Baustoffe.

Im erfindungsgemäßen Verfahren können grundsätzlich alle kommerziell erhältlichen Polyvinylalkohole eingesetzt werden. Hierbei handelt es sich in der Regel um Verseifungs- und/oder Umesterungsprodukte des Polyvinylacetats oder von ähnlichen, verseifbaren Polyvinylestern oder Polyvinylethern, die in der Regel einen Verseifungsgrad > 70 Mol-%, bezogen auf die Gesamtzahl der verseifbaren Monomereinheiten, aufweisen. Eine umfassende Darstellung kommerziell erhältlicher Polyvinylalkohole findet sich beispielsweise in Ullmann's Encyclopedia of Industrial Chemistry, 5th ed., Vol. 21A, S. 743-747 sowie in C. Finch (Hg.), Polyvinylalcohol, Wiley Interscience, New York, 1973. Der im erfindungsgemäßen Verfahren eingesetzte Polyvinylalkohol weist in der Regel einen Verseifungsgrad im Bereich von 73,4 bis 99,9 Mol-%, entsprechend einer Esterzahl von 1 bis 270 mg KOH/g Polyvinylalkohol, vorzugsweise im Bereich von 82,6 bis 92,4 Mol-%, entsprechend einer Esterzahl von 90 bis 190 mg KOH/g Polyvinylalkohol, auf. Der Polymerisationsgrad liegt vorzugsweise im Bereich von 100 bis 5000, insbesondere im Bereich von 200 bis 1000. Als Polymerisationsgrad ist die mittlere Anzahl von Monomereinheiten pro Polymermolekül zu verstehen. Derartige Polyvinylalkohole sind in der Regel durch eine Viskosität im Bereich von 1 bis 40 mPa $\cdot$ s, vorzugsweise im Bereich von 2 bis 20 mPa $\cdot$ s (bestimmt nach Höppler als 4 gew.-%-ige Lösung in Wasser bei 20 °C), charakterisiert.

Im erfindungsgemäßen Verfahren wird der Polyvinylalkohol in der Regel in einer Menge von 1 bis 30 Gew.-%, vorzugsweise 3 bis 20 Gew.-% und insbesondere 5 bis 15 Gew.-%, bezogen auf das Gesamtgewicht des Polymerisats P in der wässrigen Polymerisatdispersion, eingesetzt. Zusammen mit dem Polyvinylalkohol können auch die bekannten Trocknungshilfsmittel des Standes der Technik eingesetzt werden, wobei Hydroxylgruppen enthaltende Polymere bevorzugt werden. Geeignete Hydroxylgruppen enthaltende Polymere sind beispielsweise Verseifungsprodukte von Copolymeren des Vinylacetats mit Ethylen sowie Copolymere von Hydroxyalkylestern ethylenisch ungesättigter Carbonsäuren mit ethylenisch ungesättigten Carbonsäuren. Unter letztgenannten sind solche bevorzugt, die aus 30 bis 70 Mol-% ethylenisch ungesättigten Carbonsäuren, beispielsweise Acrylsäure und 30 bis 70 Mol-% wenigstens eines Hydroxyalkylesters einer ethylenisch ungesättigten Carbonsäure, z.B. Hydroxyethylacrylat und/oder Hydroxypropylacrylat, aufgebaut sind und deren zahlenmittleres Molekulargewicht $M_n$ im Bereich von 5000 bis 15 000 liegt. Derartige Polymere sind z. B. aus der älteren Patentanmeldung P 197 07 746.3 bekannt. Trocknungshilfsmittel des Standes der Technik werden vorzugsweise nicht mehr als 50 Gew.-%, bezogen auf die Gesamtmenge an Trocknungshilfsmittel, ausmachen. Ferner liegt der Gesamtgehalt an Trocknungshilfsmittel in der Regel unterhalb 30 Gew.-%, bezogen auf das Polymerisat P.

Die Trocknung der wässrigen Polymerisatdispersion kann in üblicher Weise, beispielsweise durch Gefriertrocknung oder vorzugsweise durch Sprühtrocknung erfolgen. Bei der Sprühtrocknung werden die zu trocknenden Polymerisatdispersionen in Gegenwart des Trocknungshilfsmittels in einem Trockenturm, durch den ein Warmluftstrom geführt wird, getrocknet. Die Temperatur des Warmluftstroms beträgt in der Regel am Eingang des Trockenturms 100 bis 200 °C, vorzugsweise 110 bis 150 °C, und am Turmausgang etwa 30 bis 90 °C, vorzugsweise 50 bis 80 °C. Die zu trocknende Polymerisatdispersion kann gegen den Warmluftstrom oder vorzugsweise parallel in den Warmluftstrom eingeführt werden. Die Zugabe kann über Ein- oder Mehrstoffdüsen oder über eine rotierende Scheibe erfolgen. Die Abscheidung der Polymerisatpulver erfolgt üblicherweise unter Verwendung von Zyklonen oder Filterabscheidern.

Grundsätzlich kann das Trocknungsmittel, d. h. sowohl der erfindungsgemäße Polyvinylalkohol als auch die Trocknungshilfsmittel des Standes der Technik, während des Trocknungsvorganges in Form von Lösungen, beispielsweise als wässrige oder wässrigalkoholische Lösungen, der zu trocknenden Polymerisatdispersion zudosiert werden. Vorzugsweise gibt man das Trocknungshilfsmittel vor der Trocknung zu der Polymerisatdispersion. Das Trocknungsmittel kann sowohl als Feststoff oder vorzugsweise als Lösung, z. B. als wässrig-alkoholische Lösung oder insbesondere als wässrige Lösung, zugegeben werden. Auch kann man den erfindungsgemäß zum Einsatz kommenden Polyvinylalkohol oder das Trocknungshilfsmittel des Standes der Technik bereits während der Herstellung der wässrigen Polymerisatdispersion als sogenanntes Schutzkolloid (siehe unten) zugeben. In einer bevorzugten Ausführungsform der vorliegenden Erfindung werden die Trocknungshilfsmittel erst im Anschluss an die Herstellung der Polymerisatdispersion zugegeben. Der Feststoffgehalt der zu trocknenden Polymerisatdispersion, die bereits das Trocknungshilfsmittel enthält, liegt in der Regel im Bereich von 10 bis 60 Gew.-%, vorzugsweise im Bereich von 20 bis 50 Gew.-% (jeweils gerechnet als Polymerisat + Trocknungshilfsmittel, bezogen auf das Gesamtgewicht der Dispersion).

Ferner kann man der zu trocknenden Polymerisatdispersion während des Trocknungsvorganges ein feinteiliges anorganisches Oxid, beispielsweise eine feinteilige Kieselsäure oder ein feinteiliges Silicat, z. B. Talkum, als Antibackmittel zugeben. Vorzugsweise handelt es sich um eine feinteilige Kieselsäure mit einer mittleren Teilchengröße im Bereich von 0,01 bis 0,5 μm, die sowohl hydrophil als auch hydrophobisiert sein kann. Das Antibackmittel kann vor oder während der Trocknung der Polymerisatdispersion zudosiert werden. In einer anderen Ausführungsform gibt man das Antibackmittel in einem für Feststoffe geeigneten Mischorgan, beispielsweise einem Rüttler, Rollstuhl-Schneckenmischer oder ähnlichem, zu dem Polymerpulver. Sofern erwünscht, wird man das Antibackmittel in einer Menge von 0,5 bis 10 Gew.-% und vorzugsweise in einer Menge von 1 bis 4 Gew.-%, bezogen auf das Polymerpulver (bzw. auf die Summe an Polymerisat P + Trocknungshilfsmittel in der wässrigen Polymerisatdispersion), einsetzen.

In der Regel ist das zu trocknende Polymerisat P der wässrigen Polymerisatdispersion aus wenigstens einem vinylaromatischen Monomer (a), das vorzugsweise ausgewählt ist unter Styrol, α-Methylstyrol, 2-, 3- und 4-Methylstyrol, 4-tert.-Butylstyrol und den Chlorstyrolen, Butadien als Monomer (b) und gegebenenfalls den von den Monomeren (a) und (b) verschiedenen Monomeren (c) aufgebaut.

Die Monomere (c) umfassen:

als Monomere (c1) ethylenisch ungesättigte Mono- und Dicarbonsäuren mit 3 bis 8 C-Atomen, wie Acrylsäure, Methacrylsäure, Crotonsäure, Acrylamidoglykolsäure, Vinylessigsäure, Maleinsäure, Itaconsäure und die Halbester der Maleinsäure mit $C_1$-$C_4$-Alkanolen, ethylenisch ungesättigte Sulfonsäuren wie Vinylsulfonsäure, Allylsulfonsäure, Styrolsulfonsäure, 2-Acrylamidomethylpropansulfonsäure, und ethylenisch ungesättigte Phosphonsäuren, z. B. Vinylphosphonsäure, Allylphosphonsäure, Styrolphosphonsäure und 2-Acrylamido-2-Methylpropanphosphonsäure. Die Monomere (c1), insbesondere die Sulfonsäuren und die Phosphonsäuren können auch in Form ihrer wasserlöslichen Salze, beispielsweise in Form ihrer Alkalimetallsalze und insbesondere ihrer Natriumsalze eingesetzt werden. Besonders bevorzugte Monomere (c1) sind Acrylsäure und Methacrylsäure;

als Monomere (c2) die Amide ethylenisch ungesättigter Carbonsäuren, wie Acryl-amid und Methacrylamid, sowie die N-Alkylolamide, vorzugsweise die N-Methylolamide ethylenisch ungesättigter Carbonsäuren, wie N-Methylolacrylamid und N-Methylolmethacrylamid;

ferner Monomere (c3), die von den Monomeren (a), (b), (c1) und (c2) verschieden sind. Hierzu zählen die Hydroxyalkylester ethylenisch ungesättigter Carbonsäuren, insbesondere Hydroxyethyl- und Hydroxypropylester, z. B. Hydroxyethylacrylat, Hydroxypropylacrylat, Hydroxyethylmethacrylat und Hydroxypropylmethacrylat, Acrylnitril und Methacrylnitril, N-Vinyllactame, wie N-Vinylpyrrolidon und N-Vinylcaprolactam; bevorzugte Monomere (c3) sind die Hydroxyalkylester ethylenisch ungesättigter Carbonsäuren, insbesondere Acrylnitril und Methacrylnitril.

und vernetzende Monomere (Monomere (c4)). Zu den vernetzenden Monomeren zählen solche, die eine reaktive Carbonylgruppe oder eine Epoxygruppe aufweisen, beispielsweise N-Diacetonacrylamid, N-Diacetonmethacrylamid, Acetylacetoxyethylacrylat

und Acetylacetoxyethylmethacrylat, Glycidylacrylat und Glycidylmethacrylat, sowie zweifach ethylenisch ungesättigte Verbindungen, z. B. die Di- und Triacrylate bzw. -methacrylate von Di- und trifunktionellen Alkoholen, z. B. Ethylenglykoldiacrylat, Diethylenglykoldiacrylat, Triethylenglykoldiacrylat, Butandioldiacrylat, Hexandioldiacrylat, Trimethylolpropantriacrylat und Tripropylenglykoldiacrylat.

Der Anteil der Monomere (a) und (b) an der gesamten, das Polymerisat P konstituierenden Monomere liegt vorzugsweise im Bereich von 80 bis 99,5 Gew.-%, wobei das Gewichtsverhältnis von vinylaromatischen Monomeren (a) zu Butadien insbesondere im Bereich von 3:1 bis 1:3 und ganz besonders bevorzugt im Bereich von 2,5:1 bis 1:1 liegt. Dementsprechend liegt der Anteil der Monomere (c) an den das Polymerisat P konstituierenden Monomeren im Bereich von 0,5 bis 20 Gew.-% insbesondere 1 bis 10 Gew.-%. Hierin machen vorzugsweise die Monomere (c1) nicht mehr als 5 Gew.-%, bezogen auf die Gesamtmonomermenge, die Monomere (c2) nicht mehr als 5 Gew.-%, bezogen auf die Gesamtmonomermenge, und die Monomere (c3) nicht mehr als 10 Gew.-%, bezogen auf die Gesamtmonomermenge, aus. Der Anteil an vernetzenden Monomeren (c4) beträgt in der Regel weniger als 5 Gew.-%. In einer bevorzugten Ausführungsform enthalten die Polymerisate P kein Monomer (c4) einpolymerisiert.

In einer bevorzugten Ausführungsform der vorliegenden Erfindung ist das Polymerisat P aufgebaut aus:

- 25 bis 70 Gew.-%, insbesondere 50 bis 65 Gew.-%, Styrol und/oder $\alpha$-Methylstyrol,

- 25 bis 70 Gew.-%, insbesondere 25 bis 50 Gew.-% Butadien sowie aus

- 0,5 bis 4 Gew.-% Monomeren (c1), insbesondere Acrylsäure und/oder Methacrylsäure,

- 1 bis 3 Gew.-% Monomeren (c2), insbesondere Acrylamid, Methacrylamid, N-Methylolacrylamid und/oder N-Methylolmethacrylamid,
und/oder

- 0,5 bis 4 Gew.-% Acrylnitril und/oder Methacrylnitril.

Hierunter sind ganz besonders bevorzugte solche Polymerisate P, worin das Gewichtsverhältnis von Monomeren (a) zu Butadien im Bereich von 3:1 bis 1:3 und ganz besonders bevorzugt im Bereich von 2,5:1 bis 1:1 liegt. Besonders bevorzugt ist auch, wenn das Polymerisat P wenigstens ein Monomer (c1) und wenigstens ein Monomer (c2) oder wenigstens ein Monomer (c2) und wenigstens ein Monomer (c3) einpolymerisiert enthält.

Die Glasübergangstemperatur der für das erfindungsgemäße Verfahren geeigneten Polymerisate P liegt in der Regel im Bereich von -50 °C bis +50 °C. Alle Angaben zur Glasübergangstemperatur beziehen sich hier und im Folgenden auf die gemäß ASTM D 3418-82 mittels "Differential Scanning Calorimetry" bestimmte "midpoint"-Temperatur.

Die Glasübergangstemperatur hängt naturgemäß von der Monomerzusammensetzung des Polymerisats P ab und kann nach Fox (T. G. Fox, Bull. Am. Phys. Soc. (Ser. II) 1, 1956, S. 123) abgeschätzt werden. Für die Glasübergangstemperatur von Mischpolymerisaten gilt bei großen Molmassen in guter Näherung

$$\frac{1}{T_g} = \frac{X^1}{T_g{}^1} + \frac{X^2}{T_g{}^2} + \cdots \cdots \frac{X^n}{T_g{}^n}$$

wobei $X^1$, $X^2$, ..., $X^n$ die Massenbrüche 1, 2, ..., n und $T_g{}^1$, $T_g{}^2$, ..., $T_g{}^n$ die Glasübergangstemperaturen der jeweils nur aus einem der Monomeren 1, 2, ..., n aufgebauten Polymeren in Grad Kelvin bedeuten. Letztere sind z.B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed., J. Wiley, New York 1989 bekannt.

Bevorzugte Polymerisatdispersionen sind weiterhin solche, bei denen der gewichtsmittlere Durchmesser $d_w$ der dispergierten Polymerisatpartikel $\geq 100$ nm und besonders bevorzugt $\geq 150$ nm ist. Üblicherweise beträgt $d_w \leq 2000$ nm und vorzugsweise $\leq 1000$ nm. Es ist ferner günstig, wenn die Durchmesser der dispergierten Polymerisatpartikel über einen breiten Durchmesserbereich verteilt sind.

Der $d_w$-Wert der Teilchengröße wird wie üblich definiert als das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972) Seiten 782 bis 796, bestimmt wird. Die Ultrazentrifugenmessung liefert die integrale Massenverteilung des Teilchendurchmessers einer Probe. Hieraus läßt sich entnehmen, wieviele Gewichtsprozent der Teilchen einen Durchmesser gleich oder unter einer bestimmten Größe haben.

Ein geeignetes Maß zur Charakterisierung der Breite der Durchmesserverteilung ist der Quotient $Q = (d_{90} - d_{10})/d_{50}$, wobei $d_m$ der Durchmesser ist, der von m Gew.-% der dispergierten Polymerisatpartikel nicht überschritten wird. Vorzugsweise beträgt Q 0,2 bis 1,5. Die Herstellung von Polymerisatdispersionen mit einer derartigen Teilchenverteilungsbreite ist dem Fachmann bekannt, z.B. aus der DE-A-43 07 683.

Die Herstellung der erfindungsgemäß zu trocknenden wässrigen Polymerisatdispersionen kann grundsätzlich auf alle hierfür geeigneten Weisen erfolgen. Beispielsweise ist es denkbar, die Monomere (a), (b) und (c) in bekannter Weise, beispielsweise durch Lösungs-, Suspensions- oder Fällungspolymerisation zu einem Polymerisat P zu polymerisieren und dieses anschließend in eine wässrige Dispersion zu überführen (sog. Sekundärdispersion). Vorzugsweise wird man die wässrige Polymerisatdispersion jedoch durch radikalische, wässrige Emulsionspolymerisation der vorgenannten Monomere herstellen. Bei einer radikalischen Emulsionspolymerisation polymerisiert man in der Regel eine wässrige Monomeremulsion unter Zuhilfenahme eines Radikalstarters in Gegenwart einer oberflächenaktiven Substanz, beispielsweise einem Schutzkolloid und/oder einem Emulgatorsystem. Verfahren hierzu sind grundsätzlich dem Stand der Technik bekannt.

Als Radikalstarter (Polymerisationsinitiatoren) kommen alle diejenigen Verbindungen in Betracht, die in der Lage sind, eine radikalische, wässrige Emulsionspolymerisation auszulösen. Hierzu zählen sowohl organische, wie anorganische Peroxide, als auch Azoverbindungen. Ebenfalls geeignet sind auch Redoxinitiatorsysteme. Bevorzugte Initiatorsysteme sind die Peroxide, wie Wasserstoffperoxid, tert.-Butylhydroperoxid und Isopropylhydroperoxid. Besonders bevorzugt sind die Salze der Peroxidischwefelsäure, insbesondere deren Alkalimetallsalze (z. B. Kalium- und Natriumsalz) und/oder deren Ammoniumsalze. Üblicherweise wird der Radikalstarter in einer Menge von 0,3 bis 2 Gew.-%, bezogen auf die zu polymerisierende Monomere eingesetzt.

Als oberflächenaktive Substanzen kommen sowohl Schutzkolloide, d. h. wasserlösliche Polymere mit einem Molekulargewicht $\geq$ 2000, als auch Emulgatoren in Frage. Die grenzflächenaktiven Substanzen werden üblicherweise in Mengen bis zu 10 Gew.-%, vorzugsweise 0,5 bis 5 Gew.-% und insbesondere 1 bis 4 Gew.-%, bezogen auf die zu polymerisierenden Monomere, eingesetzt.

Geeignete Schutzkolloide sind die obengenannten Polyvinylalkohole, Stärke- und Cellulosederivate, Polyacrylsäuren, Copolymerisate der Acrylsäure und der Methacrylsäure mit hydrophoben Monomeren, Polyacrylamid oder Vinylpyrrolidon enthaltende Polymerisate. Ferner sind als Schutzkolloide auch die vorgenannten Hydroxylgruppen enthaltenden Copolymerisate geeignet. Bevorzugte Schutzkolloide sind die oben genannten Polyvinylalkohole sowie die oben genannten Hydroxylgruppen enthaltenden Copolymere.

Geeignete Emulgatoren können sowohl anionischer, kationischer als auch nicht-ionischer Natur sein. Zu den anionischen Emulgatoren zählen Alkali- und Ammoniumsalze von Alkylsulfaten (Alkylrest: $C_8$-$C_{12}$), von Schwefelsäurehalbestern ethoxylierter Alkanole (EO-Grad: 2 bis 50, Alkylrest: $C_{12}$ bis $C_{18}$) und ethoxylierter Alkylphenole (EO-Grad: 3 bis 50, Alkylrest: $C_4$-$C_9$), von Alkylsulfonsäuren (Alkylrest: $C_{12}$-$C_{18}$) und von Alkylarylsulfonsäuren (Alkylrest: $C_9$ bis $C_{18}$). Geeignete anionische Emulgatoren sind auch die Salze der Di-$C_6$-$C_{18}$-alkylderivate des Bis(phenylsulfonyl)ethers und deren technische Gemische, die z. B. als DOWFAX$^®$ 2A1 der DOW Chemical Co. im Handel sind. Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208.

Neben den genannten anionischen Emulgatoren können auch nichtionische Emulgatoren verwendet werden. Bevorzugte nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_9$) und Ethoxylate langkettiger Alkohole (EO-Grad: 3 bis 50, Alkylrest: $C_8$-$C_{36}$). Bevorzugt werden anionische Kombinationen oder Kombinationen aus wenigstens einem anionischen Emulgator und wenigstens einem nichtionischen Emulgator.

Das Molekulargewicht der Polymerisate P kann durch Zugabe geringer Mengen, in der Regel bis zu 2 Gew.-%, bezogen auf die zu polymerisierenden Monomere, einer oder mehrerer, das Molekulargewicht regelnder Substanzen, z. B. organische Thioverbindungen, Silane, Allylalkohole oder Aldehyde eingestellt werden.

Die Emulsionspolymerisation kann sowohl kontinuierlich als auch nach der Batchfahrweise, vorzugsweise nach einem halbkontinuierlichen Verfahren erfolgen. Dabei können die zu polymerisierenden Monomere kontinuierlich, einschließlich Stufen- oder Gradientenfahrweise, dem Polymerisationsansatz zugeführt werden. Zu diesem Zweck kann man die Monomeren sowohl als Monomermischung als auch als wässrige Monomeremulsion der Polymerisation zuführen

Neben der saatfreien Herstellungsweise kann zur Einstellung einer definierten Polymerteilchengröße die Emulsionspolymerisation nach dem Saatlatex-Verfahren oder in Gegenwart von in situ hergestellten Saatlatex erfolgen. Verfahren hierzu sind bekannt und können dem Stand der Technik entnommen werden (siehe EP-B 40419 sowie 'Encyclopedia of Polymer Science and Technology', Vol. 5, John Wiley & Sons Inc., New York 1966, S. 847).

In einer bevorzugten Ausführungsform der vorliegenden Erfindung wird die Polymerisation in Anwesenheit von 0,01 bis 3 Gew.-% und insbesondere 0,05 bis 1,5 Gew.-% eines Saatlatex (Feststoffgehalt des Saatlatex, bezogen auf Gesamtmonomermenge), vorzugsweise mit vorgelegtem Saatlatex (Vorlagensaat) durchgeführt. Der Latex weist in der Regel eine gewichtsmittlere Teilchengröße von 10 bis 400 nm, vorzugsweise 20 bis 120 nm und insbesondere 20 bis 50 nm auf. Seine konstituierenden Monomere sind beispielsweise Styrol, Methylmethacrylat, n-Butylacrylat und Mischungen davon, wobei der Saatlatex in untergeordnetem Maße auch Monomere (c2) und/oder (c3), z. B. Acrylsäure und/oder Methacrylsäure und/oder deren Amide, vorzugsweise weniger als 10 Gew.-%, bezogen auf das Gesamtgewicht der Polymerisatteilchen im Saatlatex, einpolymerisiert enthalten kann.

Polymerisationsdruck und Polymerisationstemperatur sind von untergeordneter Bedeutung. Im Allgemeinen arbeitet man bei Temperaturen zwischen Raumtemperatur und 120 °C, vorzugsweise bei Temperaturen von 40 bis 110 °C und besonders bevorzugt zwischen 50 und 100 °C bei einem Druck im Bereich von 1 bis 10 bar.

Im Anschluss an die eigentliche Polymerisationsreaktion ist es gegebenenfalls erforderlich, die erfindungsgemäßen, wässrigen Polymerisatdispersionen weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Die Absenkung der Restmonomere kann weiterhin chemisch durch radikalische Nachpolymerisation, insbesondere unter Einwirkung von Redoxinitiatorsystemen, wie sie z. B. in der DE-A 44 35 423, DE-A 44 19 518 sowie in der DE-A 44 35 422 aufgeführt sind, erfolgen. Bevorzugt wird die Nachpolymerisation mit einem Redoxinitiatorsystem aus wenigstens einem organischen Peroxid und einem organischen Sulfit durchgeführt.

Auf diesem Wege sind Polymerisatdispersionen mit Polymergehalten bis zu 80 Gew.-%, bezogen auf das Gesamtgewicht der Dispersion, zugänglich. In der Regel wird der Feststoffgehalt der auf diesem Wege hergestellten Polymerisatdispersionen im Bereich von 40 bis 60 Gew.-% liegen. Die so erhältlichen Polymerisatdispersionen können dann, sofern erforderlich, auf den für die Trocknung gewünschten Feststoffgehalt durch Verdünnung mit einem geeigneten Lösungsmittel, beispielsweise mit Wasser oder einer Wasser-Emulgator-Mischung und/oder durch Zugabe einer wässrigen Lösung des Trocknungshilfsmittels eingestellt werden.

Das erfindungsgemäße Verfahren zeichnet sich durch eine hohe Pulverausbeute bei vergleichsweise geringer Menge an Trocknungshilfsmittel aus. Die durch das erfindungsgemäße Verfahren erhältlichen Polymerpulver zeichnen sich durch eine besonders gute Dispergierbarkeit und einen geringen Anteil an Sekundärteilchen aus. Die erfindungsgemäß erhältlichen Polymerpulver eignen sich als Bindemittel in Anstrichmassen, in Beschichtungsmassen (insbesondere für Papier), in Lacken, in Klebstoffen, in Fliesenklebern und in kunstharzgebundenen Putzen (Kunstharzputze), wie sie z. B. in der EP-A-629 650 beschrieben sind. Ferner neigen die Polymerpulver auch bei Einarbeitung in mineralische Baustoffe nicht zur Verfärbung.

In besonderer Weise eignen sich die erfindungsgemäß erhältlichen Polymerpulver zur Modifizierung von mineralischen Baustoffen bzw. von gebrauchsfertigen mineralischen Baustoffzubereitungen.

Unter mineralischen Baustoffzubereitungen versteht man Zubereitungen, die wenigstens ein mineralisches Bindemittel wie Kalk, Gips, Ton und/oder Zement und gegebenenfalls mineralische Zuschläge enthalten und die durch Anrühren mit Wasser in ihre gebrauchsfertige Form überführt werden, wobei letztere, wenn sie sich selbst überlassen ist, an der Luft oder auch unter Wasser, gegebenenfalls unter Einwirkung erhöhter Temperatur, als Funktion der Zeit steinartig verfestigt (mineralischer Baustoff). Neben den Zuschlägen enthalten mineralische Baustoffzubereitungen auch übliche Hilfsmittel, z. B. je nach Anwendungszweck Verdicker oder Verflüssiger und Entschäumer.

Die Zuschläge bestehen in der Regel aus körnigem oder faserförmigem, natürlichem oder künstlichem Stein (Kies, Sand, Mineralfasern), in Sonderfällen auch aus Metallen oder organischen Fasern oder aus Gemischen der genannten Zuschläge. Häufig werden zum Zweck der Farbgebung auch Buntpigmente als Zuschläge mitverwendet.

Bevorzugt eignen sich die erfindungsgemäßen Polymerpulver zur Modifizierung von solchen mineralischen Baustoffen, worin das mineralische Bindemittel aus 70 bis 100 Gew.-% Zement und 0 bis 30 Gew.-% Gips besteht. Übliche Zementarten sind Hochofenzement, Höhenschieferzement, Portlandzement, hydrophobierter Portlandzement, Schnellzement, Quellzement oder Tonerdezement, wobei sich die Verwendung von Portlandzement als besonders günstig erweist.

Das erfindungsgemäße Polymerpulver wird zur Modifizierung derartiger mineralischer Baustoffe, je nach konkretem Vorhaben in Mengen bis zu 80 Gew.-%, üblich 2 bis 50 Gew.-% und häufig 3 bis 20 Gew.-%, bezogen auf das mineralische Bindemittel, verwendet. Zu diesem Zweck kann man das Polymerpulver in eine mineralische Baustoffzubereitung geben, die neben den Zuschlägen und dem mineralischen Bindemittel sowie gegebenenfalls üblichen Hilfsstoffen bereits das erforderliche Anmachwasser enthält.

Eine wichtige Anwendungsform von Polymerpulvern betrifft ihren Einsatz in sog. "Trockenzubereitungen" von mineralischen Baustoffen. Unter Trockenzubereitungen versteht man solche Zubereitungen, die das mineralische Bindemittel und gegebenenfalls die erforderlichen Zuschläge sowie die Hilfsmittel enthalten, und die am Gebrauchsort durch Zugabe von Wasser in die gebrauchsfertige Form überführt werden. Zur Modifizierung solcher Trockenzubereitungen werden naturgemäß Polymerpulver eingesetzt.

Bevorzugt umfaßt die Trockenzusammensetzung der mineralischen Baustoffe: 10 bis 60 Gew.-%, vorzugsweise 15 bis 50 Gew.-% mineralisches Bindemittel, 0,05 bis 20 Gew.-%, vorzugsweise 0,1 bis 10 Gew.-% und insbesondere 0,2 bis 8 Gew.-% modifizierendes Polymerisatpulver, gegebenenfalls bis 25 Gew.-% an sich übliche Hilfsmittel, beispielsweise Entschäumer oder Verdicker, und als Restmenge Zuschläge wie Sand, Kies, Füllstoffe ( z. B. Calciumcarbonat), Pigmente, natürliche oder synthetische Fasern etc.

Mineralische Baustoffe in Form von Trockenzubereitungen, die eines oder mehrere der erfindungsgemäßen Polymerpulver enthalten sind neu und ebenfalls Gegenstand der vorliegenden Erfindung. Die Herstellung solcher Trockenzubereitungen kann durch Abmischen der einzelnen Komponenten, d. h. des Bindemittels, der Zuschläge, der Hilfsmittel (in trockener Form) sowie des Polymerpulvers, in der für pulverförmige Komponenten üblichen Weise abgemischt werden, wobei die Reihenfolge der Abmischung im Prinzip unerheblich ist und durch Zweckmäßigkeitserwägungen bestimmt wird.

Besonders bevorzugt eignen sich die erfindungsgemäßen Polymerpulver zur Modifizierung von Trockenzubereitungen für sog. Reparaturmörtel, standfeste Fliesenkleber und standfeste Wandspachtelmassen. Diese besonders bevorzugten Ausführungsformen der erfindungsgemäßen Trockenzubereitungen enthalten üblicherweise Zement als mineralisches Bindemittel.

Die Reparaturmörtel, standfeste Fliesenkleber und standfeste Wandspachtelmassen enthalten bevorzugt:

-  40 bis 80 Gew.-% Sand
-  15 bis 40 Gew.-% Zement, vorzugsweise Portlandzement,
-  bis zu 2 Gew.-% übliche Thixotropiermittel,
-  bis zu 4 Gew.-% Fasern,

- 0,1 bis 2,0 Gew.-% Entschäumer,
- bis zu 1 Gew.-Teile Verflüssiger sowie
- 0,1 bis 10 Gew.-%, vorzugsweise 0,5 bis 5 Gew.-% erfindungsgemäßes Polymerpulver,

wobei sich die Gesamtmasse der Komponenten zu 100 Gew.-% addieren.

Besonders vorteilhafte Eigenschaften weisen die besonders bevorzugten Trockenzubereitungen auf, wenn das Polymerpulver, bezogen auf das Polymerisat P 5 bis 15 Gew.-% Polyvinylalkohol enthält, insbesondere dann, wenn der Polyvinylalkohol einer der oben als bevorzugt angegebenen Polyvinylalkohole ist. Für die Eigenschaften des Reparaturmörtels ist es ferner von Vorteil, wenn das Polymerisat P im Polymerpulver eine Glasübergangstemperatur (bestimmt an Filmen, die aus den zu trocknenden Polymerisatdispersionen hergestellt wurden) im Bereich von -40 °C bis 30 °C und besonders bevorzugt im Bereich von -30 °C bis 20 °C aufweist. Derartige Glasübergangstemperaturen sind insbesondere dann gewährleistet, wenn das Gewichtsverhältnis der im Polymerisat P einpolymerisierten Monomere (a) zu dem einpolymerisierten Butadien (Monomer (b)) im Bereich von 1:3 bis 3:1 und insbesondere im Berich von 2,5:1 bis 1:1 liegt. Hinsichtlich der Art und Menge der Monomere (a), (b) und (c) gilt das oben gesagte.

Der im Reparaturmörtel eingesetzte Sand weist üblicherweise ein arithmetisches Mittel der Korngrößedurchmesser im Bereich von 0,06 bis 3 mm auf. Der Zusatz des Thixotropierungsmittels dient dem Zweck, die Fließfähigkeit des wässrigen Mörtels vor seiner Verfestigung im Ruhezustand zu erniedrigen. Üblicherweise wird ein Mikrosilica als Thixotropierungsmittel eingesetzt. Zur Verbesserung der Rissüberbrückungsfähigkeit kann man dem Mörtel natürliche oder synthetische Fasern, beispielsweise Mineralfasern wie Asbest oder Kunststofffasern, z. B. Dralon® (Länge z. B. 1 bis 10 mm, längenbezogene Masse z. B. 3 bis 10 dtex) zusetzen.

Durch Zugabe von Anmachwasser in geeigneter Menge werden die erfindungsgemäßen Trockenzubereitungen in die gebrauchsfertige Form überführt. Hierbei richtet sich die Menge des Anmachwassers in einer dem Fachmann bekannten Weise nach dem Gehalt an mineralischen Binemittel in der Zubereitung. Enthält die Trockenzubereitung Zement als mineralisches Bindemittel, wird man üblicherweise ein Wasser/Zement-Gewichtsverhältnis (W/Z-Zahl) im Bereich von 0,3 bis 0,7 wählen.

Gebrauchsfertige Mörtelzubereitungen, die die erfindungsgemäßen Polymerpulver enthalten, zeichnen sich durch eine verbesserte Soforthaftung des Mörtels auf üblichen Untergründen, insbesonderen mineralischen Untergründen wie Beton, Gasbeton, Mineralfaserplatten, Gips, Putz, Naturstein, Kunststein etc, sowie gleichzeitig durch eine sehr geringe Werkzeugklebrigkeit gegenüber solchen Mörteln aus, die ein Polymerpulver des Standes der Technik enthalten. Gleichzeitig sind die Mörtel, welche die erfindungsgemäßen Polymerpulver enthalten, gegenüber den Mörteln mit Polymerpulvern des Standes der Technik hinsichtlich der Sofortstandfestigkeit als auch der Nachmodellierbarkeit gleichwertig oder gar überlegen.

Die nachfolgend angegebenen Beispiele sollen die vorliegende Erfindung verdeutlichen, ohne sie jedoch einzuschränken.

Beispiele

I. Herstellung der zu trocknenden Polymerisatdispersionen (Dispersionen D1 bis D4 sowie DV1)

1. Dispersion D1

In einem Druckgefäß ($N_2$ gespült) wurden 30,8 kg Wasser, 126 g Dowfax® 2 EP (45 gew.-%ige wässrige Emulgatorzubereitung), 715 g Butadien, 600 g einer 7 gew.-%iden Natriumperoxodisulfatlösung und 2,4 kg einer 30 gew.-%igen wässrigen Polystyroldispersion (gewichtsmittlerer Polystyrolteilchendurchmesser = 30 nm) als Polymersaat, die bezogen auf enthaltenes Polystyrol 20 Gew.-% Na-$C_{12}$-Alkylbenzolsulfonat als Emulgator enthielt, vorgelegt und unter Rühren auf 80 °C erwärmt. Nach dem Anspringen der Polymerisation wurden die nachfolgenden Zuläufe A, B und C zeitgleich beginnend innerhalb von 4 Stunden unter Aufrechterhaltung der 80 °C dem Polymerisationsgefäß räumlich getrennt zugeführt. Nach Beendigung der Zuläufe wurde das Reaktionsgemisch weitere 2 Stunden bei 80 °C gerührt und dann auf Raumtemperatur abgekühlt. Der Polymerisationsumsatz betrug > 99,5 Gew.-%. Anschließend wurde der pH-Wert des wässrigen Dispergiermediums mittels einer 25 gew.-%igen wässrigen Ammoniaklösung auf einen Wert von 6,5 eingestellt.

Es wurde eine wässrige Polymerisationsdispersion erhalten, deren Feststoffgehalt 50 Gew.-% betrug. Der bei der Polymerisation gebildete Koagulatanteil lag unter 0,5 Gew.-%, bezogen auf die Menge der zu polymerisierenden Monomeren. Die Glasübergangstemperatur der Verfilmung der wässrigen Polymerisatdispersion betrug 23 °C (DSC "midpoint"). Der gewichtsmittlere Teilchendurchmesser des Polymerisats lag bei 160 nm.

Zulauf A:
homogenes Gemisch aus 35,4 kg Wasser, 9,9 kg einer 3 gew.-%igen wässrigen Natriumpyrophosphatlösung, 500 g einer 0,4 gew.-%igen wässrigen Lösung von Na-EDTA, 1200 g Dowfax® 2 EP, 1650 g einer 15 gew.-%igen wässrigen Lösung von Natriumlaurylsulfat, 1000 g tert.-Dodecylmercaptan, 3,47 kg Acrylsäure, 2,98 kg einer 50 gew.-%igen wässrigen Acrylamid-Lösung und 63,4 kg Styrol;

Zulauf B:
30 kg Butadien;

Zulauf C:
10,7 kg einer 7 gew.-%igen wässrigen Natriumpersulfatlösung.

Dispersion D2

In einem Druckgefäß ($N_2$ gespült) wurden 3,5 kg Wasser, 115 g einer 7 gew.-%igen, wässrigen Natriumperoxodisulfatlösung, 265 g der für die Herstellung von D1 verwendeten Polymersaat und 5 Gew.-% von Zulauf 1 vorgelegt und unter Rühren auf 85 °C erwärmt. Nach dem Anspringen der Polymerisation wurden der Rest von Zulauf 1 und Zulauf 2 zeitgleich beginnend innerhalb von 5,5 Stunden unter Aufrechterhaltung der 80 °C dem Polymerisationsgefäß räumlich getrennt zugeführt. Nach Beendigung der Zuläufe wurde das Reaktionsgemisch eine weitere Stunde bei 85 °C gerührt und dann auf Raumtemperatur abgekühlt.
Die erhaltene Dispersion hatte einen Feststoffgehalt von 51 Gew.-% und einen pH-Wert von 3,6. Die Lichtdurchlässigkeit der Dispersion (LD-Wert einer 0,01 Gew.%-igen Probe) lag bei 42 %.

Zulauf 1: Emulsion aus

| 8400 g | entionsiertem Wasser |
| 4900 g | Butadien |
| 9500 g | Styrol |
| 300 g | Acrylnitril |
| 600 g | wässrige N-Methylolacrylamid-Lösung (50 gew.-%ig) |
| 525 g | Emulgatorlösung 1 |
| 180 g | tert.-Dodecylmercaptan |

Zulauf 2: wässrige Lösung aus

| 1000 g | entionsiertem Wasser |
| 240 g | Natriumperoxodisulfat |

Als Emulgatorlösung 1 wurde eine 28 gew.-%ige wässrige Lösung des Natriumsalzes eines sulfonierten $C_{12}$-Fettalkoholethoxilats verwendet (2 bis 3 EO-Einheiten; Texapon® NSO der HENKEL KGaA).
Als LD-Wert wird die relative Lichtdurchlässigkeit einer 0,01 gew.-%igen wässrigen Dispersion gegen Wasser angegeben, wie sie für weißes Licht bei 20 °C und 2,5 cm Schichtdicke bestimmt wurde.

Dispersion D3

Analog Dispersion D2 wurde eine Wässrige Polymerisatdispersion D4 hergestellt. Abweichend von der Vorgehensweise bei D2 betrug die Polymerisationstemperatur 90 °C.

Vorlage:

| 4200 g | entionisiertes Wasser |
| 300 g | Butadien |
| 15 g | Natriumsalz der Ethylendiamintetraessigsäure (Na-EDTA) |
| 30 g | Natriumhydrogencarbonat |

44 g        Polymersaat (s.o.)

45 g        Natriumperoxodisulfat

Zulauf 1: Emulsion aus

8400 g      entionsiertem Wasser
5250 g      Butadien
9000 g      Styrol
150 g        Acrylsäure
600 g        wässrige Acrylamid-Lösung (50 Gew.%)
250 g        Emulgatorlösung 2
75 g         tert.-Dodecylmercaptan

Zulauf 2: wässrige Lösung aus

1600 g      entionsiertem Wasser
75 g         Natriumperoxodisulfat

Die erhaltene Dispersion hatte einen Feststoffgehalt von 52,8 Gew.-% und einen pH-Wert von 4,3. Die Lichtdurchlässigkeit der Dispersion (LD-Wert einer 0,01 Gew.%-igen Probe) lag bei 6 %.

Als Emulgatorlösung 2 wurde eine 30 gew.-%ige wässrige Lösung des Natriumsalzes eines sulfonierten $C_{12}$-$C_{14}$-Fettalkoholethoxilats verwendet (30 EO-Einheiten; Disponil$^®$ FES 77 der HENKEL KGaA).

Dispersion D4

Analog Dispersion D3 wurde eine Wässrige Polymerisatdispersion D4 hergestellt.

Vorlage:

4200 g      entionisiertes Wasser
300 g        Butadien
15 g         Natriumsalz der Ethylendiamintetraessigsäure (Na-EDTA)
30 g         Natriumhydrogencarbonat
44 g         Polymersaat (s.o.)
45 g         Natriumperoxodisulfat

Zulauf 1: Emulsion aus

8400 g      entionsiertem Wasser
6000 g      Butadien
8250 g      Styrol
150 g        Acrylsäure
600 g        wässrige Acrylamid-Lösung (50 Gew.%)
250 g        Emulgatorlösung 2
75 g         tert.-Dodecylmercaptan

Zulauf 2: wässrige Lösung aus

1600 g     entionsiertem Wasser
75 g       Natriumperoxodisulfat

Die erhaltene Dispersion hatte einen Feststoffgehalt von 51,2 Gew.-% und einen pH-Wert von 3,1. Die Lichtdurchlässigkeit der Dispersion (LD-Wert einer 0,01 Gew.%-igen Probe) lag bei 21 %.

Vergleichsdispersion DV1

Ein Gemisch aus

150,0 g     Wasser
5,6 g       einer 20 Gew.-%igen wäßrigen Lösung eines ethoxylierten p-Isooctylphenols (EO-Grad 25),
0,48 g     einer 35 Gew.-%igen wäßrigen Lösung eines Na-Salzes eines sulfatierten und ethoxylierten p-Isooctylphenols (EO-Grad 25),
3,9 g       einer 10 Gew.-%igen wäßrigen Ameisensäure-Lösung,
1,7 g       Natriumhydrogencarbonat und
3,4 g       einer 20 Gew.-%igen wäßrigen Polyacrylamid-Lösung

wurde auf 90°C erhitzt. Anschließend wurden zu diesem Gemisch zeitgleich beginnend und unter Aufrechterhaltung der Innentemperatur von 90°C in 2 h eine wäßrige Monomeremulsion, bestehend aus

291,2 g n-Butylacrylat,
252,0 g Styrol,
11,2 g Acrylamid,
5,6 g Methacrylamid,
8,4 g einer 20 Gew.-%igen wäßrigen Lösung eines ethoxylierten p-Isooctylphenols (EO-Grad 25),
11,5 g einer 35 Gew.-%igen wäßrigen Lösung eines Na-Salzes eines sulfatierten und ethoxylierten p-Isooctylphenols (EO-Grad 25) und
162,9 g Wasser

und in 2,5 h eine Lösung von 3,3 g Natriumperoxodisulfat in 90 g Wasser kontinuierlich zugetropft. Danach wurde das Reaktionsgemisch noch 120 min bei 90°C gerührt und auf 60°C abgekühlt. Nach Zugabe einer Lösung von 1,1 g t-Butylhydroperoxid in 5,5 g Wasser wurde bei dieser Temperatur innerhalb von 1 h eine Lösung von 0,6 g Natriumhydroxymethansulfinat in 15 g Wasser zugegeben und 0,5 h nachgerührt. Nach 15 min kühlte man auf Raumtemperatur ab und neutralisierte mit 3,5 g einer 10 Gew.-%igen wäßrigen Ammoniak-Lösung. Nach Filtration wurde eine Dispersion mit einem Feststoffgehalt von 55,4%, einer Lichtdurchlässigkeit einer 0,01 Gew.-%igen Dispersion bei 20°C und einer Schichtdicke von 2,5 cm ("LD-Wert") von 9% und einem pH-Wert von 7,3 erhalten. Die Glastemperatur (DSC-midpoint, s.o.) des Polymerisats betrug +15°C.

II. Erfindungsgemäßes Trocknungshilfsmittel S1 und Vergleichs-Trocknungshilfsmittel SV1 und SV2

Trocknungshilfsmittel S1

Als Trocknungshilfsmittel S1 diente ein teilverseiftes Polyvinylacetat mit folgenden Kenngrößen:

-    Viskosität einer 4 gew.-%igen, wässrigen Lösung bei 20 °C = 4 mPa $\cdot$ s (gemessen nach DIN 53015)
-    Hydrolysegrad: 87,7 %
-    Esterzahl: 140 mg KOH/g Polyvinylalkohol

Vergleichs-Trocknungshilfsmittel SV1

1,20 kg Naphthalin wurden bei 85°C vorgelegt und unter Kühlen mit 1,18 kg konzentrierter Schwefelsäure derart versetzt, daß die Innentemperatur stets unter 100°C lag. Nach beendeter Zugabe ließ man 8 h bei 100°C Innentemperatur nachreagieren. Das Reaktionsgemisch wurde auf 50°C abgekühlt und unter Einhaltung einer Innentemperatur von 50 bis 55°C portionsweise mit 0,80 kg einer 30 Gew.-%igen wäßrigen Formaldehydlösung versetzt. Nach beendeter Zugabe gab man sofort 0,70 kg vollentsalztes Wasser hinzu, heizte auf 100°C auf und ließ 5 h bei dieser Temperatur weiterreagieren. Dann kühlte man auf 65°C ab und gab 0,80 kg einer 35 Gew.-%igen Calciumhydroxid-Aufschlämmung in vollentsalztem Wasser hinzu. Man filtrierte über ein 200-μm-Sieb ab und erhielt 2,0 kg einer wäßrigen Lösung SV1 mit einem Feststoffgehalt von 34 Gew.-% und einem pH-Wert von 7,9.

Vergleichs-Trocknungshilfsmittel SV2

In einem Reaktor wurden 1,6 kg Natriumperoxodisulfat in 39,3 kg Wasser vorgelegt. Man erwärmte auf 80 °C. Anschließend gab man unter Beibehaltung der Temperatur Zulauf 1 kontinuierlich innerhalb 2 Stunden zu und ließ 1,5 Stunden bei 80 °C nachreagieren. Danach gab man unter Beibehaltung der Temperatur innerhalb 1 Stunde kontinuierlich Zulauf 2 zu. Nach weiteren 60 Minuten bei 80 °C ließ man auf Raumtemperatur abkühlen und filtrierte über ein 200 μm-Sieb. Man erhielt eine klare wässrige Lösung des Copolymerisats mit einem Feststoffgehalt von 38,8 Gew.-% und einem pH-Wert von 4,5. Das zahlenmittlere Molekulargewicht betrug 11200 Dalton, das gewichtsmittlere Molekulargewicht 51200 Dalton (gem. GPC).

| Zulauf 1: | 15,1 kg | entionisiertes Wasser |
|---|---|---|
| | 9,1 kg | 25 Gew.-%ige wässrige Natronlauge |
| | 11,2 kg | Acrylsäure (AS) |
| | 0,1 kg | Ethylhexylthioglykolat |
| | 28,8 kg | Hydroxyethylmethacrylat (HEMA) |
| Zulauf 2: | 0,4 kg | Natriumperoxodisulfat |
| | 5,3 kg | entionisiertes Wasser |

III Herstellung der Polymerisatpulver P1 bis P4 sowie PV5 bis PV8

Die Herstellung der Polymerpulver erfolgte durch Sprühtrocknung gemäß den Angaben in Tabelle 1. Zu diesem Zweck wurden die Dispersionen D1 bis D4 und DV1 mit Wasser auf einen Feststoffgehalt von 40 Gew.-% verdünnt. Die Trocknungshilfsmittel wurden durch Lösen in bzw. Verdünnen mit Wasser auf einen Feststofgehalt von 20 Gew.-% eingestellt. Dann gab man rasch und unter kräftigem Rühren die Dispersion zur Lösung des Trocknungshilfsmittels und stellte mit vollentsalztem Wasser einen Feststoffgehalt von 30 Gew.-% ein. Die jeweiligen Mengen an Trocknungshilfsmittel können der Tabelle 1 entnommen werden.
Die Sprühtrocknung führte man in einem Minor-Labortrockner der Fa. GEA Wiegand GmbH (Geschäftsbereich Niro) mit Zweistoffdüsenzerstäubung (Durchmesser der Düse: 1,3 mm) durch. Die Temperatur des Warmluftstroms am Turmeingang lag bei etwa 130 °C und am Turmausgang bei etwa 60 °C. Die Trocknungsleistung lag bei 2 kg Sprühspeise/h gleichzeitig mit der Sprühspeise wurden 120 g/h einer feinteiligen Kieselsäure als Antibackmittel in die Trocknungskammer eindosiert. Die Ergebnisse der Sprühtrocknung sind in Tabelle 1 zusammengefasst.

Tabelle 1

| Pulver | Dispersion | Trocknungshilfsmittel [Gew.-%][1] | | Pulverausbeute [%] |
|---|---|---|---|---|
| P1 | D1 | S1 | 10 | 82 |
| P2 | D2 | S1 | 10 | 74 |
| P3 | D3 | S1 | 10 | 84 |
| P4 | D4 | S1 | 10 | 70 |
| PV1 | D1 | SV1 | 10 | 79 |
| PV2 | D2 | SV1 | 10 | 73 |
| PV3 | D3 | SV2 | 25 | 72 |
| PV4 | DV1 | S1 | 10 | 69 |

1) bezogen auf 100 Gew.-% Polymerisat P in Dispersion

IV Herstellung und anwendungstechnische Prüfung eines erfindungsgemäßen Reparaturmörtels

In einem Mischer gemäß EN 196/1 stellte man eine Trockenzubereitung für einen Reparaturmörtel her, die folgende Komponenten enthielt:

250 g        Quarzsand gemäß DIN 1164, Teil 7 der Korngruppe 0,08 bis 0,5 mm,
500 g        Quarzsand gemäß DIN 1164, Teil 7 der Korngruppe 0,5 bis 1,0 mm,
217 g        Portlandzement 35F,
21,7 g       Polymerpulver aus III.

Für die anwendungstechnische Prüfung wurde die Trockenzubereitung mit der erforderlichen Menge an Anmachwasser (ca. 7 g bis 13 g je 100 g Trockenzubereitung) versetzt, so dass alle gebrauchsfertigen Zubereitungen die gleiche Verarbeitungskonsistenz aufwiesen. Die jeweils erforderliche Menge an Wasser, charakterisiert durch das Wasser/Zement-Gewichtsverhältnis (W/Z-Zahl) ist in Tabelle 2 angegeben.

Zur Überprüfung der anwendungstechnischen Eigenschaften wurde der frisch angerührte Mörtel auf eine trockene, d. h. nichtvorgenässte Betonplatte mit einer Kelle angeworfen. Beurteilt wurde nach folgenden Eigenschaften I bis IV. Die Ergebnisse sind in Tabelle 2 zusammengefasst:

I Klebrigkeit des Mörtels am Werkzeug (keine Werkzeugklebrigkeit = 1; sehr starke Klebrigkeit am Werkzeug = 6)

II Soforthaftung des angeworfenen Mörtels an der Betonplatte (Haftung des kompletten angeworfenen Materials an der Platte = 1; gesamtes angeworfenes Material prallt von der Betonplatte ab, d. h. haftet nicht = 6)

III Sofortstandfestigkeit des Mörtels an der Betonplatte (ein angeworfener Mörtelkegel von ca. 5 cm Dicke zeigt kein Absacken an der Platte = 1; der Mörtel haftet zwar an der Platte, fließt jedoch sofort wieder von der Wand = 6)

IV Modellierbarkeit (Nachbearbeitbarkeit) und Standfestigkeit des Mörtels an der Betonplatte (der Mörtel ist ausgezeichnet modellierbar und auch unter den Bedingungen des Modellierens standfest = 1; Mörtel fällt unter den Bedingungen des Modellierens vollständig von der Platte oder verflüssigt unter den Bedingungen des Modellierens und fließt von der Wand = 6)

Tabelle 2

| | W/Z[1] | Eigenschaften | | | |
|---|---|---|---|---|---|
| | | I | II | III | IV |
| P1 | 0,51 | 1 | 1-2 | 1 | 1 |
| P2 | 0,52 | 1-2 | 2 | 1 | 1 |
| P3 | 0,52 | 1 | 1-2 | 1 | 1 |
| P4 | 0,52 | 1 | 1-2 | 1 | 1-2 |
| PV1 | 0,40 | 3-4 | 4 | 1 | 6 |
| PV2 | 0,39 | 6 | 6 | 1 | 5 |
| PV3 | 0,32 | 4 | 6 | 3 | 5 |
| PV4 | 0,58 | 3 | 4-5 | 1 | 1-2 |
| PV5[2] | 0,46 | 6 | 6 | 1 | 1 |

1) W/Z-Zahl (= Gewichtsverhältnis Wasser/Zement)
2) Polyvinylacetatpulver, mit Polyvinylalkohol; VINNAPAS® RE 545 Z, Fa. Wacker Chemie GmbH

**Patentansprüche**

1. Verfahren zur Herstellung von Polymerpulvern aus wässrigen Polymerisatdispersionen, worin das dispergierte Polymerisat P in einpolymerisierter Form enthält:

   i) wenigstens ein vinylaromatisches Monomer (a),
   ii) 1,3-Butadien als Monomer (b) und
   iii) ein oder mehrere von den Monomeren (a) und (b) verschiedene Monomere (c),

   dadurch gekennzeichnet, dass man die wässrige Polymerisatdispersion in Anwesenheit von Polyvinylalkohol als Trocknungshilfsmittel trocknet.

2. Verfahren nach Anspruch 1, dadurch gekennzeichnet, dass man einen Polyvinylalkohol verwendet, der einen mittleren Polymerisationsgrad im Bereich von 100 bis 5000 aufweist.

3. Verfahren nach Anspruch 1 oder 2, dadurch gekennzeichnet, dass man einen Polyvinylalkohol verwendet, der eine Esterzahl im Bereich von 1 bis 270 mg KOH/g aufweist.

4. Verfahren nach einem der vorhergehenden Ansprüche, dadurch gekennzeichnet, dass man 1 bis 30 Gew.-% Polyvinylalkohol, bezogen auf das Gewicht des dispergierten Polymerisats P einsetzt.

5. Verfahren nach einem der vorhergehenden Ansprüche, dadurch gekennzeichnet, dass die Polymerisatdispersion in Gegenwart wenigstens eines anorganischen Anti-Blockmittels getrocknet wird.

6. Verfahren nach einem der vorhergehenden Ansprüche, dadurch gekennzeichnet, dass im dispergierten Polymerisat P das Gewichtsverhältnis der einpolymerisierten Monomere (a) zu (b) im Bereich von 1:3 bis 3:1 liegt.

7. Verfahren nach einem der vorhergehenden Ansprüche, dadurch gekennzeichnet, dass die Monomere (c) ausgewählt sind unter ethylenisch ungesättigten Carbonsäuren, den Amiden ethylenisch ungesättigter Carbonsäuren, den Hydroxyalkylestern ethylenisch ungesättigter Carbonsäuren, den N-Alkylolamiden ethylenisch ungesättigter Carbonsäuren, Acrylnitril und Methacrylnitril.

8. Polymerpulver, erhältlich durch ein Verfahren gemäß einem der vorhergehenden Ansprüche.

9. Verwendung der Polymerpulver aus Anspruch 8 als Bindemittel, insbesondere in Anstrichmassen, in Beschichtungsmassen, in Lacken, in Klebstoffen und zur Modifizierung mineralischer Baustoffe.

10. Mineralischer Baustoff in Form einer Trockenzubereitung, enthaltend wenigstens ein Polymerpulver gemäß Anspruch 8.